(19) **Europäisches Patentamt / European Patent Office / Office européen des brevets**

(11) **EP 4 507 223 A1**

(12) **EUROPEAN PATENT APPLICATION**
published in accordance with Art. 153(4) EPC

(43) Date of publication:
**12.02.2025 Bulletin 2025/07**

(21) Application number: **23795216.3**

(22) Date of filing: **21.04.2023**

(51) International Patent Classification (IPC):
***H04L 1/00*** *(2006.01)*

(52) Cooperative Patent Classification (CPC):
**H04B 7/0413; H04B 7/0456; H04L 1/00; H04L 5/00; H04W 28/06**

(86) International application number:
**PCT/CN2023/089773**

(87) International publication number:
**WO 2023/207783 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 CN 202210461460**

(71) Applicant: **Huawei Technologies Co., Ltd.
Shenzhen, Guangdong 518129 (CN)**

(72) Inventors:
- **WANG, Fan
  Shenzhen, Guangdong 518129 (CN)**
- **ZHANG, Zhang
  Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **COMMUNICATION METHOD, APPARATUS AND SYSTEM**

(57) Embodiments of this application provide a communication method and an apparatus. The method includes: receiving first data; sending second data through a plurality of antenna ports, where the second data is obtained by performing, by a network device, distribution matching, forward error correction encoding, and modulation on the first data based on a bit mapping relationship; and sending indication information to a terminal device, where the indication information is used by the terminal device to determine the bit mapping relationship, and the bit mapping relationship is used by the terminal device to perform distribution dematching on the second data to obtain an estimated value of the first data. Based on the foregoing solution, in a MIMO system using probabilistic shaping, the probabilistic shaping can be used to effectively resist multi-user interference.

200

Network device — Terminal device

S210: Obtain first data

S220: Obtain second data by performing distribution matching, forward error correction encoding, and modulation on the first data

S230: Send the second data through a plurality of antenna ports

S240: Send indication information, where the indication information is used by the terminal device to determine a bit mapping relationship

S250: Perform distribution dematching on the second data based on the bit mapping relationship to obtain an estimated value of the first data

FIG. 2

## Description

This application claims priority to Chinese Patent Application No. 202210461460.9, filed with the China National Intellectual Property Administration on April 28, 2022 and entitled "COMMUNICATION METHOD, APPARATUS, AND SYSTEM", which is incorporated herein by reference in its entirety.

## TECHNICAL FIELD

This application relates to the communication field, and in particular, to a communication method, an apparatus, and a system.

## BACKGROUND

To obtain a channel capacity of an additive white Gaussian noise (additive white Gaussian noise, AWGN) channel, it needs to be assumed that transmitted symbols follow Gaussian distribution. However, in a communication system, for example, a 4th generation (4th generation, 4G) mobile communication system or a 5th generation (5th generation, 5G) mobile communication system, quadrature amplitude modulation (quadrature amplitude modulation, QAM) is typically used. Because the quadrature amplitude modulation is uniform modulation, the quadrature amplitude modulation experiences a performance loss compared with a Gaussian distribution modulation method. In probabilistic shaping (probabilistic shaping, PS), constellation shaping is introduced to set occurrence probabilities of all QAM symbols to follow discrete Gaussian distribution, so that a capacity approximates a capacity in Gaussian distribution.

In the 5G mobile communication system, a massive multiple-input multiple-output (massive multiple-input multiple-output, mMIMO) technology significantly increases a quantity of antennas, especially a quantity of antennas at a transmitting end, to improve a network capacity. Therefore, for multiple-input multiple-output, because a large quantity of antennas are configured for a base station, simultaneous transmission of a large quantity of users may be supported through spatial multi-antenna processing. Therefore, the mMIMO technology is a technology that effectively improves a multi-user capacity.

In conventional technologies, the probabilistic shaping can resist only white Gaussian noise, and for the probabilistic shaping, it is assumed that a channel is an interference-free channel. However, in a multiple-input multiple-output (multiple-input multiple-output, MIMO) system, the probabilistic shaping cannot effectively resist multi-user interference.

Therefore, in the MIMO system using the probabilistic shaping, how to use the probabilistic shaping to effectively resist multi-user interference is a technical problem to be resolved by the present invention.

## SUMMARY

This application provides a communication method, so that in a MIMO system using probabilistic shaping, the probabilistic shaping can be used to effectively resist multi-user interference.

According to a first aspect, a communication method is provided, including: obtaining first data; sending second data through a plurality of antenna ports, where the second data is obtained by performing, by a network device, distribution matching, forward error correction encoding, and modulation on the first data based on a bit mapping relationship; and sending indication information to a terminal device, where the indication information is used by the terminal device to determine the bit mapping relationship, and the bit mapping relationship is used by the terminal device to perform distribution dematching on the second data to obtain an estimated value of the first data.

Based on the foregoing technical solution, the network device performs distribution matching on user data by using a bit mapping relationship, and then sends, through an air interface, user data obtained through a series of processing. At a receiving end, the network device sends indication information, where the indication information is used for determining the bit mapping relationship. Then, at the receiving end, distribution dematching is performed on the user data by using the determined bit mapping relationship to obtain an estimation of the user data. In this way, in a MIMO system using probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the first aspect, in some implementations of the first aspect, the indication information includes widely linear precoding information, and the widely linear precoding information includes two precoding matrices T1 and T2. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the first aspect, in some implementations of the first aspect, the indication information includes a non-circularity coefficient $\tau$ and a rotation angle $\theta$, the non-circularity coefficient $\tau$ satisfies $\tau \in [0, 1]$, and the rotation angle $\theta$ satisfies $\theta \in [0, 2\pi]$ or $\theta \in [-\pi, \pi]$. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the first aspect, in some implementations of the first aspect, the indication information includes constellation point probability information $P$. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the first aspect, in some implementations of the first aspect, the indication information includes the bit mapping relationship. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the first aspect, in some implementations of the first aspect, the bit mapping relationship is related to inter-user interference information. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the first aspect, in some implementations of the first aspect, the method further includes: obtaining inter-user interference information and predefined constellation point probability information P0; and determining the bit mapping relationship based on the inter-user interference information and the predefined constellation point probability information P0. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the first aspect, in some implementations of the first aspect, the second data satisfies an irregular Gaussian signaling feature. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

According to a second aspect, a communication method is provided, including: receiving second data, where the second data is obtained by performing, by a network device, distribution matching, forward error correction encoding, and modulation on first data, and the second data is sent by the network device through a plurality of antenna ports; receiving indication information; determining a bit mapping relationship based on the indication information; and performing distribution dematching on the second data based on the bit mapping relationship to obtain an estimated value of the first data.

Based on the foregoing technical solution, at a receiving end, a terminal device receives the indication information sent by the network device, where the indication information is used by the terminal device to determine the bit mapping relationship. Then, at the receiving end, distribution dematching is performed on user data by using the determined bit mapping relationship to obtain an estimation of the user data. In this way, in a MIMO system using probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the second aspect, in some implementations of the second aspect, the indication information includes widely linear precoding information.

The determining a bit mapping relationship based on the indication information includes: determining the bit mapping relationship based on the widely linear precoding information, where the widely linear precoding information includes two precoding matrices T1 and T2. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the second aspect, in some implementations of the second aspect, the indication information includes a non-circularity coefficient $\tau$ and a rotation angle $\theta$. The determining a bit mapping relationship based on the indication information includes: determining the bit mapping relationship based on the non-circularity coefficient $\tau$ and the rotation angle $\theta$, where the non-circularity coefficient $\tau$ satisfies $\tau \in [0, 1]$, and the rotation angle $\theta$ satisfies $\theta \in [0, 2\pi]$ or $\theta \in [-\pi, \pi]$. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the second aspect, in some implementations of the second aspect, the indication information includes constellation point probability information P. The determining a bit mapping relationship based on the indication information includes: determining the bit mapping relationship based on the constellation point probability information *P*. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the second aspect, in some implementations of the second aspect, the indication information includes the bit mapping relationship. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the second aspect, in some implementations of the second aspect, the bit mapping relationship is related to inter-user interference information. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

With reference to the second aspect, in some implementations of the second aspect, the second data satisfies an irregular Gaussian signaling feature. Based on the foregoing technical solution, in the MIMO system using the probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

According to a third aspect, a communication apparatus is provided, including: a receiving unit, configured to obtain first data; and a sending unit, configured to send second data through a plurality of antenna ports, where the second data is obtained by performing, by a network device, distribution matching, forward error correction encoding, and modulation on the first data based on a bit mapping relationship, where the sending unit is configured to send indication information to a terminal device, where the indication information is used by the terminal device to determine the bit mapping relationship, and the bit mapping relationship is used by the terminal device to perform distribution dematching on the second data to obtain an estimated value of the first data.

With reference to the third aspect, in some implementations of the third aspect, the indication information includes widely linear precoding information, and the widely linear precoding information includes two precoding matrices T1 and T2.

With reference to the third aspect, in some implementations of the third aspect, the indication information includes a non-circularity coefficient $\tau$ and a rotation angle $\theta$, the non-circularity coefficient $\tau$ satisfies $\tau \in [0, 1]$, and the rotation angle $\theta$ satisfies $\theta \in [0, 2\pi]$ or $\theta \in [-\pi, 71]$.

With reference to the third aspect, in some implementations of the third aspect, the indication information includes constellation point probability information P.

With reference to the third aspect, in some implementations of the third aspect, the indication information includes the bit mapping relationship.

With reference to the third aspect, in some implementations of the third aspect, the bit mapping relationship is related to inter-user interference information.

With reference to the third aspect, in some implementations of the third aspect, the apparatus further includes: the receiving unit, configured to obtain inter-user interference information and predefined constellation point probability information P0; and a processing unit, configured to determine the bit mapping relationship based on the inter-user interference information and the predefined constellation point probability information P0.

With reference to the third aspect, in some implementations of the third aspect, the second data satisfies an irregular Gaussian signaling feature.

According to a fourth aspect, a communication apparatus is provided, including: a receiving unit, configured to receive second data, where the second data is obtained by performing, by a network device, distribution matching, forward error correction encoding, and modulation on first data, and the second data is sent by the network device through a plurality of antenna ports, where the receiving unit is configured to receive indication information; and a processing unit, configured to determine a bit mapping relationship based on the indication information, where the processing unit is configured to perform distribution dematching on the second data based on the bit mapping relationship to obtain an estimated value of the first data.

With reference to the fourth aspect, in some implementations of the fourth aspect, the indication information includes widely linear precoding information. The processing unit is specifically configured to: determine the bit mapping relationship based on the widely linear precoding information, where the widely linear precoding information includes two precoding matrices T1 and T2.

With reference to the fourth aspect, in some implementations of the fourth aspect, the indication information includes a non-circularity coefficient $\tau$ and a rotation angle $\theta$. The processing unit is specifically configured to: determine the bit mapping relationship based on the non-circularity coefficient $\tau$ and the rotation angle $\theta$, where the non-circularity coefficient $\tau$ satisfies $\tau \in [0, 1]$, and the rotation angle $\theta$ satisfies $\theta \in [0, 2\pi]$ or $\theta \in [-\pi, \pi]$.

With reference to the fourth aspect, in some implementations of the fourth aspect, the indication information includes constellation point probability information P. The processing unit is specifically configured to: determine the bit mapping relationship based on the constellation point probability information P.

With reference to the fourth aspect, in some implementations of the fourth aspect, the indication information includes the bit mapping relationship.

With reference to the fourth aspect, in some implementations of the fourth aspect, the bit mapping relationship is related to inter-user interference information.

With reference to the fourth aspect, in some implementations of the fourth aspect, the second data satisfies an irregular Gaussian signaling feature.

According to a fifth aspect, a computer-readable storage medium is provided. The computer-readable storage medium stores computer instructions. When the computer instructions are run on a computer, the computer is enabled to perform the method in any possible implementation of the first aspect, or perform the method in any possible implementation of the second aspect.

According to a sixth aspect, a chip system is provided. The chip system includes: a processor, where the processor is coupled to a memory, and the memory is configured to store instructions. The processor is configured to invoke the instructions from the memory and execute the instructions, so that a communication device in which the chip system is installed performs the method in any possible implementation of the first aspect, or performs the method in any possible implementation of the second aspect.

**BRIEF DESCRIPTION OF DRAWINGS**

FIG. 1 is a diagram of an architecture of an application system according to an embodiment of this application;
FIG. 2 is a schematic flowchart of a communication method according to an embodiment of this application;
FIG. 3 is a schematic flowchart of a communication method according to another embodiment of this application;
FIG. 4 is a schematic flowchart of a communication method according to another embodiment of this application;
FIG. 5 is a schematic flowchart of a communication method according to another embodiment of this application;
FIG. 6 is a block diagram of an apparatus according to an embodiment of this application;
FIG. 7 is a diagram of another apparatus according to an embodiment of this application; and
FIG. 8 is a diagram of a structure of an apparatus according to an embodiment of this application.

**DESCRIPTION OF EMBODIMENTS**

The following describes the technical solutions in this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal device in embodiments of this application may be user equipment, an access terminal, a subscriber unit, a subscriber station, a mobile console, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in a global system for mobile communications GSM or a code division multiple access CDMA system, a NodeB (NodeB, NB) in a wideband code division multiple access (wideband code division multiple access, WCDMA) system, an evolved NodeB (evolved NodeB, eNB, or eNodeB) in an LTE system, or a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile console, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN). This is not limited in embodiments of this application.

By way of example and not limitation, in embodiments of this application, the terminal device may alternatively be a wearable device. The wearable device may also be referred to as a wearable smart device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not merely a hardware device, but is used to implement a powerful function through software support, data exchange, and cloud interaction. A generalized wearable smart device includes a full-featured and large-sized device that can implement complete or partial functions without depending on a smartphone, such as a smart watch or smart glasses, and a device that focuses on only one type of application function and needs to work with another device such as a smartphone, such as various smart bands for monitoring physical signs or smart jewelry.

In addition, in embodiments of this application, the terminal device may alternatively be a terminal device in an internet of things (internet of things, IoT) system. The IoT is an important part of future development of information technologies. A main technical feature of the IoT is to connect things to a network by using a communication technology to implement an intelligent network for interconnection between a person and a machine or between things. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement a method in this application by using the vehicle-mounted module, the vehicle-mounted assembly, the vehicle-mounted component, the vehicle-mounted chip, or the vehicle-mounted unit that is built in the vehicle. Therefore, embodiments of this application may be applied to the internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

In addition, the network device in embodiments of this application may be a device configured to communicate with the terminal device. The network device may also be referred to as an access network device or a radio access network device. The network device may be a transmission reception point (transmission reception point, TRP), an evolved NodeB (evolved NodeB, eNB, or eNodeB) in an LTE system, a home NodeB (for example, a home evolved NodeB or a home NodeB, HNB), a base band unit (base band unit, BBU), or a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. The network device may be an access point (access point, AP) in a WLAN or a gNB in a new radio (new radio, NR) system. This is not limited in embodiments of this application.

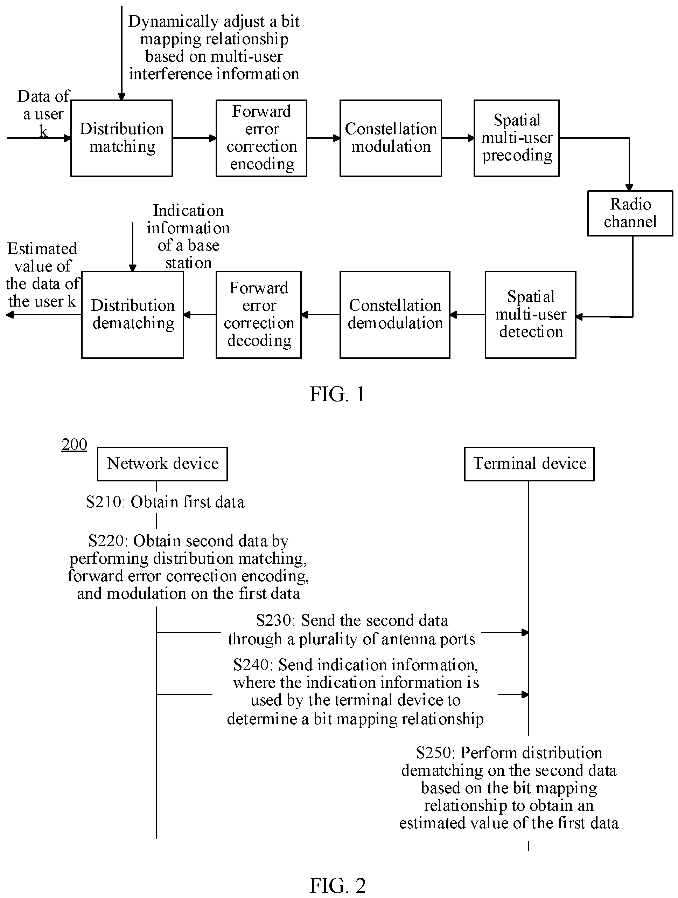

FIG. 1 is a diagram of an architecture of an application system according to an embodiment of this application. As shown in FIG. 1, a network device schedules K users in total to initiate downlink transmission. For data corresponding to any one of the users, for example, a user k, the network device adjusts a bit mapping relationship based on inter-user interference information of multi-user multiple-input multiple-output (multi-user multiple-input multiple-output, MU-MIMO). In other words, for data of the user k, distribution matching is first performed on the user data based on the bit mapping relationship, and after subsequent processing such as forward error correction encoding, constellation modulation, and multi-user spatial precoding, the user data is sent through an air interface. Then, at a receiving end, multi-user detection is first performed on the data of the user k, processing such as constellation demodulation and forward error correction decoding is performed, and the bit mapping relationship is obtained based on indication information sent by the network device. Finally, distribution dematching is performed, based on the bit mapping relationship, on the data of the user k on which the processing such as forward error correction decoding is performed, to obtain an estimated value of the data of the user k.

FIG. 2 is a schematic flowchart of a communication method according to an embodiment of this application. As shown in FIG. 2, the method specifically includes the following steps.

S210: A network device obtains first data.

Specifically, the network device obtains first data sent by K users. Any one of the users, for example, a user k, is used as an example. That is, the network device receives first data $d_k$ sent by the user k.

For ease of understanding, in the following embodiments, the first data $d_k$ is used as an example for description.

S220: The network device obtains second data by performing distribution matching, forward error correction encoding, and modulation on the first data.

Specifically, the network device performs distribution matching on the first data based on a bit mapping relationship. For example, the network device performs bit mapping on the first data $d_k$ based on a bit mapping relationship Z to obtain a bit stream $d'_k$, where $d'_k = Z(d_k)$. Then, the network device performs forward error correction encoding and modulation on the bit stream $d'_k$ to obtain the second data. The second data $b_k$ is represented as $b_k = CM(d'_k)$, where $CM(.)$ represents performing forward error correction encoding and modulation on the bit stream $d'_k$ of the user.

Optionally, in a possible implementation, the bit mapping relationship is related to inter-user interference information. Specifically, the network device obtains inter-user interference information $I$ among a plurality of users, determines the bit mapping relationship Z based on the inter-user interference information $I$, and then performs bit mapping on the first data $d_k$ based on the bit mapping relationship Z to obtain the bit stream $d'_k$.

Optionally, in a possible implementation, before step S220 is performed, the method may further include: obtaining inter-user interference information $I$ and predefined constellation point probability information $P_0$; and determining, by the network device, the bit mapping relationship Z based on the inter-user interference information $I$ and the predefined constellation point probability information $P_0$.

Specifically, the bit mapping relationship Z may be understood as a function relationship in which the inter-user interference information $I$ and the constellation point probability information $P_0$ are variables. To be specific, the bit mapping relationship Z may be represented as $Z = f(P_0, I)$. After determining the bit mapping relationship Z based on the inter-user interference information $I$ and the constellation point probability information $P_0$, the network device performs bit mapping on the received first data $d_k$ based on the bit mapping relationship Z to obtain the bit stream $d'_k$ after the bit mapping, that is, $d'_k = Z(d_k)$.

The constellation point probability information $P_0$ satisfies uniform distribution or discrete Gaussian distribution, and the inter-user interference information $I$ may be determined based on a transmit constellation diagram, a precoding matrix, and radio channel information of another user.

It should be noted that the second data $b_k$ satisfies an irregular Gaussian signaling feature, which may mean that I and Q paths of the second data $b_k$ are no longer independent and identically distributed, or a pseudo covariance matrix of the second data $b_k$ is not zero.

It should be further noted that in this embodiment of this application, the forward error correction encoding may be of the following types: for example, a low density parity check (low density parity check, LDPC) code, a polar code, a turbo code, or a convolutional code. A modulation method, for example, quadrature amplitude modulation QAM, in an existing communication system may be reused in constellation modulation. It should be understood that this is not limited in embodiments of this application.

Optionally, in a possible implementation, after step S220, the method may further include: The network device performs spatial multi-user precoding on the second data $b_k$ to obtain processed data. The spatial multi-user precoding may use zero-forcing beamforming ZFBF or widely linear precoding. It should be understood that this is not limited in embodiments of this application.

S230: The network device sends the second data to a terminal device through a plurality of antenna ports, and correspondingly, the terminal device receives the second data.

S240: The network device sends indication information to the terminal device, where the indication information is used by the terminal device to determine the bit mapping relationship. Correspondingly, the terminal device receives the indication information. Specifically, after receiving the indication information, the terminal device determines the bit mapping relationship based on the indication information.

S250: The terminal device performs distribution dematching on the second data based on the bit mapping relationship to obtain an estimated value of the first data.

Optionally, in a possible implementation, the indication information includes widely linear precoding information, and the widely linear precoding information includes two precoding matrices $T_1$ and $T_2$.

Specifically, the network device generates irregular Gaussian signaling by using the foregoing manners such as the distribution matching, the forward error correction encoding, and constellation mapping. Because the widely linear precoding may also implement transformation from regular Gaussian signaling to irregular Gaussian signaling, for simplicity, the network device does not directly send the foregoing bit mapping relationship $Z$ to the terminal device. In this case, the network device obtains the widely linear precoding information $T_1$ and $T_2$, and sends the indication information to the terminal device, where the indication information includes the widely linear precoding information $T_1$ and $T_2$.

Then, the terminal device determines the bit mapping relationship $Z$ based on the received widely linear precoding information $T_1$ and $T_2$, and further performs distribution dematching on the second data $b_k$ based on the bit mapping relationship $Z$ to obtain an estimated value of the first data.

Optionally, in a possible implementation, the indication information includes a non-circularity coefficient $\tau$ and a rotation angle $\theta$, where the non-circularity coefficient $\tau$ satisfies $\tau \in [0, 1]$, and the rotation angle $\theta$ satisfies $\theta \in [0, 2\pi]$ or $\theta \in [-\pi, \pi]$.

Specifically, the network device generates irregular Gaussian signaling by using the foregoing manners such as the distribution matching, the forward error correction encoding, and constellation mapping. Because the irregular Gaussian signaling may be represented by using the non-circularity coefficient $\tau$ and the rotation angle $\theta$, for simplicity, the network device may not directly send the foregoing bit mapping relationship $Z$ to the terminal device. In this case, the network device obtains the non-circularity coefficient $\tau$ and the rotation angle $\theta$, and sends the indication information to the terminal device, where the indication information includes the non-circularity coefficient $\tau$ and the rotation angle $\theta$.

Then, the terminal device determines the bit mapping relationship $Z$ based on the received non-circularity coefficient $\tau$ and the rotation angle $\theta$, and further performs distribution dematching on the second data $b_k$ based on the bit mapping relationship $Z$ to obtain an estimated value of the first data.

Optionally, in a possible implementation, the indication information includes constellation point probability information P.

Specifically, the network device generates irregular Gaussian signaling by using the foregoing manners such as the distribution matching, the forward error correction encoding, and constellation mapping. Because the irregular Gaussian signaling changes the constellation point probability information, to be specific, from the predefined constellation point probability information $P_0$ to constellation point probability information $P$, for simplicity, the network device does not directly send the foregoing bit mapping relationship $Z$ to the terminal device. In this case, the network device obtains the constellation point probability information $P$, and sends the indication information to the terminal device, where the indication information includes the constellation point probability information $P$.

Then, the terminal device determines the bit mapping relationship $Z$ based on the received constellation point probability information $P$, and further performs distribution dematching on the second data $b_k$ based on the bit mapping relationship $Z$ to obtain an estimated value of the first data.

Optionally, in a possible implementation, the indication information includes the bit mapping relationship.

Specifically, the bit mapping relationship $Z$ may be preconfigured by a core network. After obtaining the bit mapping relationship $Z$, the network device sends the indication information to the terminal device, where the indication information includes the bit mapping relationship $Z$. Then, the terminal device determines the bit mapping relationship $Z$ based on the received indication information, and further performs distribution dematching on the second data $b_k$ based on the bit mapping relationship $Z$ to obtain an estimated value of the first data.

Optionally, in a possible implementation, after step S230, the method may further include: The terminal device performs spatial multi-user detection, constellation demodulation, and forward error correction decoding on the received second data.

Specifically, first, the terminal device performs spatial multi-user detection on the second data $b_k$ to obtain an estimation $\hat{b}_k$ of the second data. A linear receiver may be used in the spatial multi-user detection. To be specific, linear processing is performed on received data and conjugate of the data, for example, in a manner of using a minimum mean square error receiver or in a manner of widely linear detection. It should be understood that this is not limited in embodiments of this application.

Then, the terminal device performs constellation demodulation and forward error correction decoding by using a receiving-end algorithm corresponding to the foregoing constellation modulation and forward error correction encoding to obtain a bit data stream $\hat{d}'_k$.

Finally, the terminal device performs distribution dematching on the bit data stream $\hat{d}'_k$ based on the bit mapping relationship $Z$ determined based on the indication information to obtain an estimated value $\hat{d}_k$ of the first data.

It should be noted that in this embodiment of this application, the forward error correction encoding may be of the following types: for example, a low density parity check (low density parity check, LDPC) code, a polar polar code, a turbo code, or a convolutional code. A modulation method, for example, quadrature amplitude modulation QAM, in an existing communication system may be reused in constellation modulation. It should be understood that this is not limited in embodiments of this application.

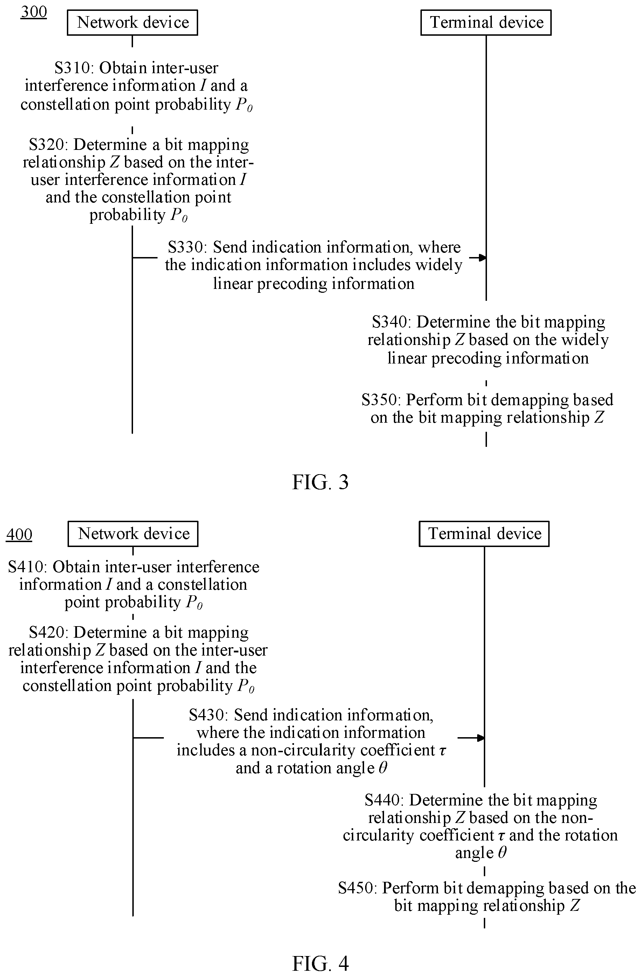

With reference to FIG. 3 to FIG. 5, the following describes in detail several specific implementations of the communication method 200 shown in FIG. 2.

FIG. 3 is a schematic flowchart of a communication method according to an embodiment of this application. As shown in FIG. 3, the method specifically includes the following steps.

S310: A network device obtains inter-user interference information $I$ and predefined constellation point probability information $P_0$.

The predefined constellation point probability information $P_0$ satisfies uniform distribution or discrete Gaussian distribution, and the inter-user interference information $I$ is determined based on a transmit constellation diagram, a precoding matrix, and radio channel information of another user.

S320: The network device determines a bit mapping relationship $Z$ based on the inter-user interference information $I$ and the predefined constellation point probability information $P_0$, and performs bit mapping on the received user data based on the bit mapping relationship $Z$.

Specifically, the bit mapping relationship $Z$ may be understood as a function relationship in which the inter-user interference information $I$ and the predefined constellation point probability information $P_0$ are variables. To be specific, the bit mapping relationship may be represented as $Z = f(P_0, I)$. It is assumed that any one of K users, for example, a user k, is used as an example. The network device receives first data $d_k$ sent by the user k. First, the network device performs bit mapping on the first data $d_k$ based on the obtained bit mapping relationship $Z$ to obtain a bit stream $d'_k$ after the bit mapping, where $d'_k = Z(d_k)$.

Second, after bit mapping is performed on the first data $d_k$ based on the bit mapping relationship $Z$, the bit stream $d'_k$ is obtained, and forward error correction encoding and constellation modulation processing are performed on the obtained bit stream $d'k$ to obtain a modulation symbol $b_k$. The modulation symbol $b_k$ may be represented as $b_k = CM(d'_k)$, where $CM(.)$ represents performing forward error correction encoding and constellation modulation on the bit stream.

It should be noted that the modulation symbol $b_k$ satisfies an updated constellation point probability $P$, and the modulation symbol $b_k$ that satisfies the updated constellation point probability $P$ also satisfies an irregular Gaussian signaling feature, which may mean that I and Q paths of the modulation symbol $b_k$ are no longer independent and identically distributed, or a pseudo covariance matrix of the modulation symbol $b_k$ is not zero.

For example, the pseudo covariance matrix $\overline{C}_{bk}$ of the modulation symbol $b_k$ may be represented by using formula (3-1):

$$\overline{C}_{b_k} = E(b_k b_k{}^T) = E \begin{bmatrix} b_{k,1}b_{k,1} & b_{k,1}b_{k,2} & \cdots & \cdots \\ b_{k,1}b_{k,2} & b_{k,2}b_{k,2} & \cdots & \cdots \\ \cdots & \cdots & \cdots & \cdots \\ \cdots & \cdots & \cdots & b_{k,m_k}b_{k,m_k} \end{bmatrix} \qquad \text{Formula (3-1)}$$

$E(.)$ represents calculating an expectation. $(.)^T$ represents a transposed matrix of a matrix. $m_k$ represents a quantity of streams of the modulation symbol $b_k$.

S330: The network device sends indication information to a terminal device, and correspondingly, the terminal device receives the indication information sent by the network device, where the indication information includes widely

linear precoding information $T_1$ and $T_2$.

Specifically, the network device generates irregular Gaussian signaling by using the foregoing manners such as the distribution matching, the forward error correction encoding, and constellation mapping. Because widely linear precoding may also implement transformation from regular Gaussian signaling to irregular Gaussian signaling, for simplicity, the network device does not directly send the foregoing bit mapping relationship Z to the terminal device. In this case, the network device obtains the widely linear precoding information $T_1$ and $T_2$, and sends the indication information to the terminal device, where the indication information includes the equivalent widely linear precoding information $T_1$ and $T_2$ that are equivalent.

For example, a user k is used as an example for description. For the user k, widely linear precoding information $T_{1,k}$ and $T_{2,k}$ of the user k are matrices of $m_k*m_k$. The network device may obtain the widely linear precoding information $T_{1,k}$ and $T_{2,k}$ of the user k in a codebook quantization manner. For example, the network device can obtain $T_{1,k}$ and $T_{2,k}$ based on a DFT codebook and the following formula (3-2):

$$\{T_{1,k}, T_{2,k}\} = \arg\min(\|T_{1,k} b^{\Box}_k + T_{2,k} b^{\Box*}_k - b_k\|^2) \qquad \text{Formula (3-2)}$$

$b^{\Box}_k$ represents a modulation symbol that satisfies the predefined constellation point probability information $P_0$, may be represented as $b^{\Box}_k = CM(d_k)$, and may be understood as a modulation symbol obtained without performing interference-oriented probabilistic shaping on a data stream. $b^{\Box}_k$ is equivalent to a symbol obtained by directly performing conventional probabilistic shaping-based coding modulation on data. $b^{\Box*}_k$ represents a conjugate matrix of $b^{\Box}_k$.

It should be noted that in this embodiment of this application, the predefined constellation point probability information $P_0$ may be evenly distributed or follow discrete Gaussian distribution. It should be understood that this is not limited in embodiments of this application.

S340: The terminal device determines the bit mapping relationship Z based on the widely linear precoding information $T_1$ and $T_2$.

S350: The terminal device performs bit demapping based on the determined bit mapping relationship Z.

It should be noted that before performing distribution dematching based on the bit mapping relationship Z, the terminal device further needs to perform spatial multi-user detection to obtain an estimation $\hat{b}_k$ of the modulation symbol $b_k$, and then performs constellation demodulation and forward error correction decoding processing on $\hat{b}_k$ to obtain a bit data stream $\hat{d}'_k$.

A linear receiver may be used in the spatial multi-user detection. To be specific, linear processing is performed on received data and conjugate of the data, for example, in a manner of using a minimum mean square error receiver or in a manner of widely linear detection. It should be understood that this is not limited in embodiments of this application.

In addition, in this embodiment of this application, the forward error correction encoding may be of the following types: for example, a low density parity check (low density parity check, LDPC) code, a polar polar code, a turbo code, or a convolutional code. A modulation method, for example, quadrature amplitude modulation QAM, in an existing communication system may be reused in constellation modulation. It should be understood that this is not limited in embodiments of this application.

In step S340, the terminal device determines and obtains the bit mapping relationship Z based on the widely linear precoding information $T_1$ and $T_2$ included in the obtained indication information.

For example, a user k is used as an example. The terminal device determines the bit mapping relationship Z based on widely linear precoding information $T_{1,k}$ and $T_{2,k}$ that are corresponding to the user k and that are included in the indication information, the bit data stream $d'_k$ obtained through the constellation demodulation and forward error correction decoding processing, and the estimation $\hat{b}_k$ of the modulation symbol, as shown in the following formula (3-3):

$$Z = \arg\min(\|T_{1,k} \overline{\overline{b_k}} + T_{2,k} \overline{\overline{b_k}}^* - \hat{b}_k\|^2) \qquad \text{Formula (3-3)}$$

$\overline{\overline{b_k}}^*$ represents a conjugate matrix of $\overline{\overline{b_k}}$. $\hat{b}_k$ represents the estimation of the modulation symbol. $\overline{\overline{b_k}}$ may be obtained based on the following formula (3-4):

$$\overline{\overline{b}}_k = CM(Z^{-1}(\hat{d}'_k))$$

Formula (3-4)

$\hat{d}'_k$ represents the bit data stream obtained through the constellation demodulation and forward error correction decoding processing. $Z^{-1}(.)$ represents an inverse operation of the bit mapping relationship $Z$. $CM(.)$ represents performing forward error correction encoding and constellation modulation on a bit stream.

After determining the bit mapping relationship $Z$ based on the foregoing formulas (3-3) and (3-4), the terminal device performs distribution dematching based on the bit mapping relationship $Z$ and the following formula (3-5), that is, performs bit demapping to obtain an estimation $\hat{d}_k$ of the restored first data.

$$\hat{d}_k = Z^{-1}(\hat{d}'_k)$$

Formula (3-5)

$\hat{d}_k$ represents the estimation of the first data obtained through the bit demapping. $\hat{d}'_k$ is the bit data stream obtained through the constellation demodulation and forward error correction decoding processing. $Z^{-1}(.)$ is an inverse operation of the bit mapping relationship $Z$.

FIG. 4 is a schematic flowchart of a communication method according to an embodiment of this application. As shown in FIG. 4, the method specifically includes the following steps.

S410: A network device obtains inter-user interference information $I$ and constellation point probability information $P_0$.

S420: The network device determines a bit mapping relationship $Z$ based on the inter-user interference information $I$ and the constellation point probability information $P_0$, and performs bit mapping.

It should be noted that S410 and S420 are similar to S310 and S320 described above. For brevity, details are not described herein again in this application.

S430: The network device sends indication information to a terminal device, and correspondingly, the terminal device receives the indication information sent by the network device, where the indication information includes a non-circularity coefficient $\tau$ and a rotation angle $\theta$.

Specifically, the network device generates irregular Gaussian signaling by using the foregoing manners such as the distribution matching, the forward error correction encoding, and constellation mapping. Because the irregular Gaussian signaling may be represented by using the non-circularity coefficient $\tau$ and the rotation angle $\theta$, for simplicity, the network device does not directly send the foregoing bit mapping relationship $Z$ to the terminal device. In this case, the network device obtains the non-circularity coefficient $\tau$ and the rotation angle $\theta$, and sends the indication information to the terminal device, where the indication information includes the non-circularity coefficient $\tau$ and the rotation angle $\theta$.

For example, a user k is used as an example for description. For the user k, the indication information sent by the network device includes a non-circularity coefficient $\tau_k$ and a rotation angle $\theta_k$ that are corresponding to the user k. In this case, the obtained irregular Gaussian signaling may be represented by using the following formula (4-1):

$$\sqrt{\frac{1+\sqrt{1-\tau_k^2}}{2}}b_k^{\square} + \sqrt{\frac{1-\sqrt{1-\tau_k^2}}{2}}e^{j\theta_k}b_k^{\square*}$$

Formula (4-1)

$\tau_k$ represents the non-circularity coefficient of the user k. $b_k^{\square}$ represents a modulation symbol that satisfies the predefined constellation point probability information $P_0$, may be represented as $b_k^{\square} = CM(d_k)$, and may be understood as a modulation symbol obtained without performing interference-oriented probabilistic shaping on a data stream. $b_k^{\square}$ is equivalent to a symbol obtained by directly performing conventional probabilistic shaping-based coding modulation on data. $b_k^{\square*}$ represents a conjugate matrix of $b_k^{\square}$. $\theta_k$ represents the rotation angle of the user k. j is an imaginary part unit, and $j^2 = 1$.

It should be noted that in this embodiment of this application, $P_0$ may be evenly distributed or follow discrete Gaussian distribution. It should be understood that this is not limited in embodiments of this application.

It should be further noted that for the user k, the network device may obtain, in a quantization manner, the non-circularity coefficient $\tau_k$ and the rotation angle $\theta_k$ that are corresponding to the user k.

For example, the network device may obtain the non-circularity coefficient $\tau_k$ and the rotation angle $\theta_k$ in a uniform quantization manner based on the following formula (4-2):

$$\{\tau_k, \theta_k\} = \arg\min\left(\left\|\sqrt{\frac{1+\sqrt{1-\tau_k^2}}{2}}\,b^{\square}{}_k + \sqrt{\frac{1-\sqrt{1-\tau_k^2}}{2}}\,e^{j\theta_k}b^{\square*}{}_k - b_k\right\|^2\right) \qquad \text{Formula (4-2)}$$

$\tau_k$ represents the non-circularity coefficient of the user k. $b^{\square}{}_k$ represents a modulation symbol that satisfies the predefined constellation point probability information $P_0$, may be represented as $b^{\square}{}_k = CM(d_k)$, and may be understood as a modulation symbol obtained without performing interference-oriented probabilistic shaping on a data stream. $b^{\square}{}_k$ is equivalent to a symbol obtained by directly performing conventional probabilistic shaping-based coding modulation on data. $b^{\square*}{}_k$ represents a conjugate matrix of $b^{\square}{}_k$. $\theta_k$ represents the rotation angle of the user k. j is an imaginary part unit, and j²=1.

S440: The terminal device determines the bit mapping relationship $Z$ based on the non-circularity coefficient $\tau$ and the rotation angle $\theta$ that are included in the indication information.

S450: The terminal device performs bit demapping based on the determined bit mapping relationship $Z$.

It should be noted that before performing distribution dematching based on the bit mapping relationship Z, the terminal device further needs to perform spatial multi-user detection to obtain an estimation $\hat{b}_k$ of a modulation symbol $b_k$, and then performs constellation demodulation and forward error correction decoding processing on $\hat{b}_k$ to obtain a bit data stream $\hat{d}'_k$.

A linear receiver may be used in the spatial multi-user detection. To be specific, linear processing is performed on received data and conjugate of the data, for example, in a manner of using a minimum mean square error receiver or in a manner of widely linear detection. It should be understood that this is not limited in embodiments of this application.

In addition, in this embodiment of this application, the forward error correction encoding may be of the following types: for example, an LDPC code, a polar code, a turbo code, or a convolutional code. A modulation method, for example, quadrature amplitude modulation QAM, in an existing communication system may be reused in constellation modulation. It should be understood that this is not limited in embodiments of this application.

In step S440, the terminal device determines and obtains the bit mapping relationship Z based on the non-circularity coefficient $\tau$ and the rotation angle $\theta$ that are included in the obtained indication information.

For example, a user k is used as an example. The terminal device determines the bit mapping relationship Z based on a non-circularity coefficient $\tau_k$ and a rotation angle $\theta_k$ that are corresponding to the user k and that are included in the indication information, the bit data stream $\hat{d}'_k$ obtained through the constellation demodulation and forward error correction decoding processing, and the estimation $\hat{b}_k$ of the modulation symbol, as shown in the following formula (4-3):

$$Z = \arg\min\left(\left\|\sqrt{\frac{1+\sqrt{1-\tau_k^2}}{2}}\,\overline{\overline{b}}_k + \sqrt{\frac{1-\sqrt{1-\tau_k^2}}{2}}\,e^{j\theta_k}\overline{\overline{b}}_k^{*} - \hat{b}_k\right\|^2\right) \qquad \text{Formula (4-3)}$$

$\overline{\overline{b}}_k^{*}$ represents a conjugate matrix of $\overline{\overline{b}}_k$. $\hat{b}_k$ represents the estimation of the modulation symbol. $\overline{\overline{b}}_k$ may be obtained based on the following formula (4-4):

$$\overline{\overline{b}}_k = CM(Z^{-1}(\hat{d}'_k)) \qquad \text{Formula (4-4)}$$

$\hat{d}'_k$ represents the bit data stream obtained through the constellation demodulation and forward error correction decoding processing. $Z^{-1}(.)$ represents an inverse operation of the bit mapping relationship $Z$. $CM(.)$ represents performing forward error correction encoding and constellation modulation on a bit stream.

After determining the bit mapping relationship $Z$ based on the foregoing formulas (4-3) and (4-4), the terminal device performs distribution dematching based on the bit mapping relationship $Z$ and the following formula (4-5), that is, performs bit demapping to obtain an estimation $\hat{d}_k$ of the restored first data.

$$\hat{d}_k = Z^{-1}(\hat{d}'_k) \qquad \text{Formula (4-5)}$$

$\hat{d}_k$ represents the estimation of the first data obtained through the bit demapping. $\hat{d}'_k$ is the bit data stream obtained through the constellation demodulation and forward error correction decoding processing. $Z^{-1}(.)$ is an inverse operation of the bit mapping relationship $Z$.

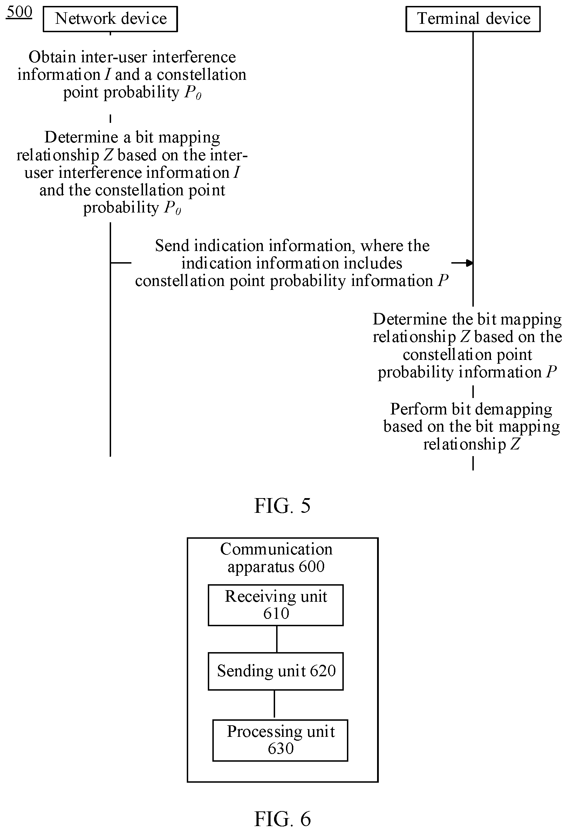

FIG. 5 is a schematic flowchart of a communication method according to an embodiment of this application. As shown in FIG. 5, the method specifically includes the following steps.

S510: A network device obtains inter-user interference information $I$ and predefined constellation point probability information $P_0$.

S520: The network device determines a bit mapping relationship $Z$ based on the inter-user interference information $I$ and the predefined constellation point probability information $P_0$, and performs bit mapping.

It should be noted that S510 and S520 are similar to S310 and S320 described above. For brevity, details are not described herein again in this application.

S530: The network device sends indication information to a terminal device, and correspondingly, the terminal device receives the indication information sent by the network device, where the indication information includes a constellation point probability $P$.

Specifically, the network device generates irregular Gaussian signaling by using the foregoing manners such as the distribution matching, the forward error correction encoding, and constellation mapping. Because the irregular Gaussian signaling changes the constellation point probability, to be specific, from $P_0$ to $P$, for simplicity, the network device does not directly send the foregoing bit mapping relationship $Z$ to the terminal device. In this case, the network device obtains the constellation point probability $P$, and sends the indication information to the terminal device, where the indication information includes the constellation point probability $P$.

S540: The terminal device determines the bit mapping relationship $Z$ based on the constellation point probability $P$. For example, a user k is used as an example for description. For the user k, the indication information received by the terminal device includes the constellation point probability $P$.

S550: The terminal device performs bit demapping based on the determined bit mapping relationship $Z$.

It should be noted that before performing distribution dematching based on the bit mapping relationship Z, the terminal device further needs to perform spatial multi-user detection to obtain an estimation $\hat{b}_k$ of a modulation symbol $b_k$, and then performs constellation demodulation and forward error correction decoding processing on $\hat{b}_k$ to obtain a bit data stream $\hat{d}'_k$.

A linear receiver may be used in the spatial multi-user detection. To be specific, linear processing is performed on received data and conjugate of the data, for example, in a manner of using a minimum mean square error receiver or in a manner of widely linear detection. It should be understood that this is not limited in embodiments of this application.

In addition, in this embodiment of this application, the forward error correction encoding may be of the following types: for example, an LDPC code, a polar code, a turbo code, or a convolutional code. A modulation method, for example, quadrature amplitude modulation QAM, in an existing communication system may be reused in constellation modulation. It should be understood that this is not limited in embodiments of this application.

In step S540, the terminal device determines and obtains the bit mapping relationship $Z$ based on the constellation point probability $P$ included in the obtained indication information.

For example, a user k is used as an example. The terminal device determines the bit mapping relationship $Z$ based on the constellation point probability $P$ that is corresponding to the user k and that is included in the indication information, the bit data stream $\hat{d}'_k$ obtained through the constellation demodulation and forward error correction decoding processing, and the estimation $\hat{b}_k$ of the modulation symbol, as shown in the following formula (5-1):

$$Z = \arg\min\left(\left\|\hat{P}(\overline{\overline{b_k}}) - P\right\|^2\right) \qquad \text{Formula (5-1)}$$

$\hat{P}$ represents an estimation of the constellation point probability $P$. $\overline{\overline{b_k}}$ may be obtained based on the following formula (5-2):

$$\overline{\overline{b_k}} = CM(Z^{-1}(\hat{d}'_k)) \qquad \text{Formula (5-2)}$$

$\hat{d}'_k$ represents the bit data stream obtained through the constellation demodulation and forward error correction decoding processing. $Z^{-1}(.)$ represents an inverse operation of the bit mapping relationship $Z$. $CM(.)$ represents performing forward error correction encoding and constellation modulation on a bit stream.

After determining the bit mapping relationship $Z$ based on the foregoing formulas (5-1) and (5-2), the terminal device performs distribution dematching based on the bit mapping relationship $Z$ and the following formula (5-3), that is, performs bit demapping to obtain an estimation $\hat{d}_k$ of the restored first data.

$$\hat{d}_k = Z^{-1}(\hat{d}'_k) \hspace{4cm} \text{Formula (5-3)}$$

$\hat{d}_k$ represents the estimation of the first data obtained through the bit demapping. $\hat{d}'_k$ is the bit data stream obtained through the constellation demodulation and forward error correction decoding processing. $Z^{-1}(.)$ is an inverse operation of the bit mapping relationship $Z$.

Based on the foregoing technical solution, in a MIMO system using probabilistic shaping, the probabilistic shaping can be used to effectively resist multi-user interference. In addition, in this embodiment of this application, the network device does not directly send the bit mapping relationship, but sends the indication information, and determines the bit mapping relationship based on the indication information, so that signaling overheads can be reduced.

Embodiments described in this specification may be independent solutions, or may be combined based on internal logic. All of these solutions fall within the protection scope of this application.

It may be understood that in the foregoing method embodiments, the methods and the operations that are implemented by the devices may alternatively be implemented by a component (for example, a chip or a circuit) of a corresponding device.

The foregoing mainly describes the solutions provided in embodiments of this application from a perspective of interaction between the devices. It may be understood that to implement the foregoing functions, each network element, such as a transmit-end device or a receive-end device, includes a corresponding hardware structure and/or software module for performing each function. A person skilled in the art should be able to be aware that in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmit-end device or a receive-end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that in embodiments of this application, module division is an example, and is merely a logical function division. During actual implementation, another division manner may be used. Descriptions are provided below by using an example in which each functional module is obtained through division corresponding to each function.

It should be understood that specific examples in embodiments of this application are merely intended to help a person skilled in the art better understand embodiments of this application, but are not intended to limit the scope of embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

The methods provided in embodiments of this application are described above in detail with reference to FIG. 2 to FIG. 5. Apparatuses provided in embodiments of this application are described below in detail with reference to FIG. 6 to FIG. 8. It should be understood that descriptions of apparatus embodiments correspond to the descriptions of the method embodiments. Therefore, for content that is not described in detail, refer to the foregoing method embodiments. For brevity, details are not described herein again.

FIG. 6 is a block diagram of a communication apparatus 600 according to an embodiment of this application. It should be understood that the apparatus 600 includes a receiving unit 610, a sending unit 620, and a processing unit 630.

The receiving unit 610 is configured to obtain first data. The sending unit 620 is configured to send second data through a plurality of antenna ports, where the second data is obtained by performing, by a network device, distribution matching, forward error correction encoding, and modulation on the first data based on a bit mapping relationship. The sending unit 620 is configured to send indication information to a terminal device, where the indication information is used by the terminal device to determine the bit mapping relationship, and the bit mapping relationship is used by the terminal device to perform distribution dematching on the second data to obtain an estimated value of the first data.

In a possible implementation, the indication information includes widely linear precoding information, and the widely linear precoding information includes two precoding matrices $T_1$ and $T_2$.

In a possible implementation, the indication information includes a non-circularity coefficient $\tau$ and a rotation angle $\theta$, the non-circularity coefficient $\tau$ satisfies $\tau \in [0, 1]$, and the rotation angle $\theta$ satisfies $\theta \in [0, 2\pi]$ or $\theta \in [-\pi, \pi]$.

In a possible implementation, the indication information includes constellation point probability information $P$.

In a possible implementation, the indication information includes the bit mapping relationship.

In a possible implementation, the bit mapping relationship is related to inter-user interference information.

In a possible implementation, the apparatus further includes: the receiving unit 610, configured to obtain inter-user interference information and predefined constellation point probability information $P_0$; and the processing unit 630, configured to determine the bit mapping relationship based on the inter-user interference information and the predefined constellation point probability information $P_0$.

In a possible implementation, the second data satisfies an irregular Gaussian signaling feature.

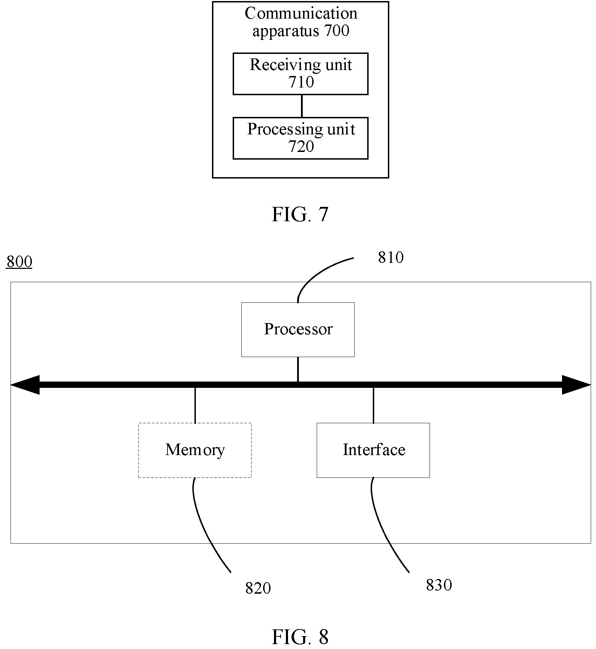

FIG. 7 is a block diagram of a communication apparatus 700 according to an embodiment of this application. It should be understood that the apparatus 700 includes a receiving unit 710 and a processing unit 720.

The receiving unit 710 is configured to receive second data, where the second data is obtained by performing, by a network device, distribution matching, forward error correction encoding, and modulation on first data, and the second data is sent by the network device through a plurality of antenna ports. The receiving unit 710 is configured to receive indication information. The processing unit 720 is configured to determine a bit mapping relationship based on the indication information. The processing unit 720 is configured to perform distribution dematching on the second data based on the bit mapping relationship to obtain an estimated value of the first data.

In a possible implementation, the indication information includes widely linear precoding information. The processing unit 720 is specifically configured to: determine the bit mapping relationship based on the widely linear precoding information, where the widely linear precoding information includes two precoding matrices $T_1$ and $T_2$.

In a possible implementation, the indication information includes a non-circularity coefficient $\tau$ and a rotation angle $\theta$. The processing unit 720 is specifically configured to: determine the bit mapping relationship based on the non-circularity coefficient $\tau$ and the rotation angle $\theta$, where the non-circularity coefficient $\tau$ satisfies $\tau \in [0, 1]$, and the rotation angle $\theta$ satisfies $\theta \in [0, 2\pi]$ or $\theta \in [-\pi, \pi]$.

In a possible implementation, the indication information includes constellation point probability information $P$. The processing unit 730 is specifically configured to: determine the bit mapping relationship based on the constellation point probability information $P$.

In a possible implementation, the indication information includes the bit mapping relationship.

In a possible implementation, the bit mapping relationship is related to inter-user interference information.

In a possible implementation, the second data satisfies an irregular Gaussian signaling feature.

It should be understood that division of the modules in the communication apparatus is merely logical function division. During actual implementation, all or some of the modules may be integrated into one physical entity or may be physically separated. In addition, all modules in the communication apparatus may be implemented in a form of software invoked by a processing element, or may be implemented in a form of hardware; or some modules may be implemented in a form of software invoked by a processing element, and some modules may be implemented in a form of hardware. For example, the modules may be processing elements that are separately disposed, or may be integrated into a chip of the communication apparatus for implementation. In addition, the modules may be stored in a memory in a form of a program, and are invoked by a processing element of the communication apparatus to perform functions of the modules. In addition, all or some of the modules may be integrated, or may be implemented independently. The processing element herein may also be referred to as a processor, and may be an integrated circuit having a signal processing capability. In an implementation process, steps of the foregoing methods or the foregoing modules may be implemented by using a hardware integrated logic circuit in the processor element, or may be implemented in a form of software invoked by the processing element.

In an example, a module in any one of the foregoing communication apparatuses may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the module in the communication apparatus may be implemented in a form of scheduling a program by a processing element, the processing element may be a general-purpose processor, for example, a central processing unit (central processing unit, CPU), or another processor that can invoke a program. For still another example, the modules may be integrated together, and implemented in a form of a system-on-a-chip (system-on-a-chip, SoC).

FIG. 8 is a diagram of a communication apparatus 800 according to an embodiment of this application. The communication apparatus is configured to implement operations of a protocol client, a protocol server, and a management library in the foregoing embodiments. As shown in FIG. 8, the communication apparatus includes a processor 810 and an interface 830. The processor 810 is coupled to the interface 830. The interface 830 is configured to communicate with another device. The interface 830 may be a transceiver or an input/output interface. The interface 830 may be, for example, an interface circuit. Optionally, the communication apparatus further includes a memory 820 configured to store instructions executed by the processor 810 or store input data required by the processor 810 to run the instructions, or store data generated after the processor 810 runs the instructions.

The method performed by the network device or the terminal device in the foregoing embodiments may be implemented by the processor 810 by invoking a program stored in a memory (which may be the memory 820 in the network device or the terminal device, or may be an external memory). In other words, the network device and the terminal device may include the processor 810. The processor 810 invokes a program in the memory to perform the method performed by the network device and the terminal device in the foregoing method embodiments. The processor herein may be an integrated circuit having a signal processing capability, for example, a CPU. The network device and the terminal device may be implemented by configuring as one or more integrated circuits for implementing the foregoing methods, for example, one or more ASICs, one or more microprocessors DSPs, one or more FPGAs, or a combination of at least two of the integrated circuit forms. Alternatively, the foregoing implementations may be combined.

Specifically, functions/implementation processes of the units in FIG. 6 and FIG. 7 may be implemented by the processor 810 in the communication apparatus 800 shown in FIG. 8 by invoking the computer-executable instructions stored in the memory 820. Alternatively, functions/implementation processes of the processing unit in FIG. 6 and FIG. 7 may be implemented by the processor 810 in the communication apparatus 800 shown in FIG. 8 by invoking the computer-executable instructions stored in the memory 820, and functions/implementation processes of the receiving unit or the sending unit in FIG. 6 and FIG. 7 may be implemented by the interface 830 in the communication apparatus 800 shown in FIG. 8.

It should be understood that the processing unit in the apparatus includes a processor. The processor is coupled to a memory. The memory is configured to store a computer program or instructions and/or data. The processor is configured to execute the computer program or the instructions and/or the data stored in the memory, so that the method in the foregoing method embodiments is executed.

It should be further understood that division of the units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, the units may be processing elements that are separately disposed, or may be integrated into a chip of the apparatus for implementation. In addition, the units may alternatively be stored in a memory in a form of a program, and are invoked by a processing element of the apparatus to perform functions of the units. The processing element herein may also be referred to as a processor, and may be an integrated circuit having a signal processing capability. In an implementation process, steps of the foregoing methods or the foregoing units may be implemented by using a hardware integrated logic circuit in the processor element, or may be implemented in a form of software invoked by the processing element.

An embodiment of this application further provides a communication system. The system includes: the foregoing network device and the foregoing terminal device.

An embodiment of this application further provides a computer-readable medium configured to store computer program code. The computer program includes instructions for performing the communication methods in embodiments of this application in the foregoing methods. The readable medium may be a read-only memory (read-only memory, ROM) or a random access memory (random access memory, RAM). This is not limited in embodiments of this application.

This application further provides a computer program product. The computer program product includes instructions. When the instructions are executed, a network device and a terminal device perform operations corresponding to the network device and the terminal device in the foregoing method.

An embodiment of this application further provides a system chip. The system chip includes: a processing unit and a communication unit. The processing unit may be, for example, a processor, and the communication unit may be, for example, an input/output interface, a pin, or a circuit. The processing unit may execute computer instructions, so that a chip in the communication apparatus performs any communication method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. Any processor mentioned above may be a CPU, a microprocessor, an ASIC, or one or more integrated circuits configured to control program execution of the foregoing feedback information transmission method. The processing unit and the storage unit may be decoupled, are disposed on different physical devices respectively, and are connected in a wired or wireless manner, to implement respective functions of the processing unit and the storage unit, to support the system chip in implementing various functions in the foregoing embodiments. Alternatively, the processing unit and the memory may be coupled to a same device.

It may be understood that the memory in this embodiment of this application may be a volatile memory or a nonvolatile memory, or may include both volatile and nonvolatile memories. The nonvolatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM and serves as an external cache. There are a plurality of different types of RAMs, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), and a direct rambus random access memory (direct rambus RAM, DR RAM).

A person of ordinary skill in the art may be aware that in combination with the examples described in embodiments disclosed in this specification, units and algorithm steps may be implemented by electronic hardware or a combination of computer software and electronic hardware. Whether such functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of solutions of embodiments.

In addition, function units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to conventional technologies, or some of the technical solutions may be implemented in a form of a software product. The computer software product is stored in a storage medium, and includes several instructions for instructing a computer device (which may be a personal computer, a server, a network device, or the like) to perform all or some the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

    obtaining first data;
    sending second data through a plurality of antenna ports, wherein the second data is obtained by performing, by a network device, distribution matching, forward error correction encoding, and modulation on the first data based on a bit mapping relationship; and
    sending indication information to a terminal device, wherein the indication information is used by the terminal device to determine the bit mapping relationship, and the bit mapping relationship is used by the terminal device to perform distribution dematching on the second data to obtain an estimation of the first data.

2. The method according to claim 1, wherein the indication information comprises widely linear precoding information, and the widely linear precoding information comprises two precoding matrices T1 and T2.

**3.** The method according to claim 1, wherein the indication information comprises a non-circularity coefficient $\tau$ and a rotation angle $\theta$, the non-circularity coefficient $\tau$ satisfies $\tau \in [0, 1]$, and the rotation angle $\theta$ satisfies $\theta \in [0, 2\pi]$ or $\theta \in [-\pi, \pi]$.

**4.** The method according to claim 1, wherein the indication information comprises constellation point probability information P.

**5.** The method according to claim 1, wherein the indication information comprises the bit mapping relationship.

**6.** The method according to any one of claims 1 to 5, wherein the bit mapping relationship is related to inter-user interference information.

**7.** The method according to any one of claims 1 to 5, wherein the method further comprises:

obtaining inter-user interference information and predefined constellation point probability information P0; and determining the bit mapping relationship based on the inter-user interference information and the predefined constellation point probability information P0.

**8.** The method according to any one of claims 1 to 7, wherein the second data satisfies an irregular Gaussian signaling feature.

**9.** A communication method, comprising:

receiving second data, wherein the second data is obtained by performing, by a network device, distribution matching, forward error correction encoding, and modulation on first data, and the second data is sent by the network device through a plurality of antenna ports;
receiving indication information;
determining a bit mapping relationship based on the indication information; and
performing distribution dematching on the second data based on the bit mapping relationship to obtain an estimated value of the first data.

**10.** The method according to claim 9, wherein the indication information comprises widely linear precoding information, and
the determining a bit mapping relationship based on the indication information comprises:
determining the bit mapping relationship based on the widely linear precoding information, wherein the widely linear precoding information comprises two precoding matrices $T_1$ and $T_2$.

**11.** The method according to claim 9, wherein the indication information comprises a non-circularity coefficient $\tau$ and a rotation angle $\theta$; and
the determining a bit mapping relationship based on the indication information comprises:
determining the bit mapping relationship based on the non-circularity coefficient $\tau$ and the rotation angle $\theta$, wherein the non-circularity coefficient $\tau$ satisfies $\tau \in [0, 1]$, and the rotation angle $\theta$ satisfies $\theta \in [0, 2\pi]$ or $\theta \in [-\pi, \pi]$.

**12.** The method according to claim 9, wherein the indication information comprises constellation point probability information $P$, and
the determining a bit mapping relationship based on the indication information comprises:
determining the bit mapping relationship based on the constellation point probability information $P$.

**13.** The method according to claim 9, wherein the indication information comprises the bit mapping relationship.

**14.** The method according to any one of claims 9 to 13, wherein the bit mapping relationship is related to inter-user interference information.

**15.** The method according to any one of claims 9 to 14, wherein the second data meets an irregular Gaussian signaling feature.

**16.** A communication apparatus, comprising:

a receiving unit, configured to obtain first data; and

a sending unit, configured to send second data through a plurality of antenna ports, wherein the second data is obtained after a network device performs distribution matching, forward error correction coding, and modulation on the first data based on a bit mapping relationship, and

the sending unit is configured to send indication information to a terminal device, wherein the indication information is used by the terminal device to determine the bit mapping relationship, and the bit mapping relationship is used by the terminal device to perform distribution dematching on the second data to obtain an estimated value of the first data.

17. The communication apparatus according to claim 16, wherein the indication information comprises widely linear precoding information, and the widely linear precoding information comprises two precoding matrices $T_1$ and $T_2$.

18. The communication apparatus according to claim 16, wherein the indication information comprises a non-circular coefficient $\tau$ and a rotation angle $\theta$, the non-circular coefficient $\tau$ meets $\tau \in [0, 1]$, and the rotation angle $\theta$ meets $\theta \in [0, 2\pi]$ or $\theta \in [-\pi, \pi]$.

19. The communication apparatus according to claim 16, wherein the indication information comprises constellation point probability information $P$.

20. The communication apparatus according to claim 16, wherein the indication information comprises the bit mapping relationship.

21. The communication apparatus according to any one of claims 16 to 20, further comprising:

the receiving unit, configured to obtain inter-user interference information and predefined constellation point probability information $P_0$; and

a processing unit, configured to determine the bit mapping relationship based on the inter-user interference information and the predefined constellation point probability information $P_0$.

22. The communication apparatus according to any one of claims 16 to 21, wherein the second data meets an irregular Gaussian signaling feature.

23. A communication apparatus, comprising:

a receiving unit, configured to receive second data, wherein the second data is obtained after a network device performs distribution matching, forward error correction coding, modulation on first data, and the second data is sent by the network device through a plurality of antenna ports, and

the receiving unit is configured to receive indication information; and

a processing unit, configured to determine a bit mapping relationship based on the indication information, wherein the processing unit is configured to perform distribution dematching on the second data based on the bit mapping relationship to obtain an estimated value of the first data.

24. The communication apparatus according to claim 23, wherein the indication information comprises widely linear precoding information, and the processing unit is specifically configured to:

determine the bit mapping relationship based on the widely linear precoding information, wherein the widely linear precoding information comprises two precoding matrices $T_1$ and $T_2$.

25. The communication apparatus according to claim 23, wherein the indication information comprises a non-circular coefficient $\tau$ and a rotation angle $\theta$, and the processing unit is specifically configured to:

determine the bit mapping relationship based on the non-circular coefficient $\tau$ and the rotation angle $\theta$, wherein the non-circular coefficient $\tau$ meets $\tau \in [0, 1]$, and the rotation angle $\theta$ meets $\theta \in [0, 2\pi]$ or $\theta \in [-\pi, \pi]$.

26. The communication apparatus according to claim 23, wherein the indication information comprises constellation point probability information $P$, and the processing unit is specifically configured to:

determine the bit mapping relationship based on the constellation point probability information $P$.

27. The communication apparatus according to claim 23, wherein the indication information comprises the bit mapping relationship.

28. The communication apparatus according to any one of claims 23 to 27, wherein the second data meets an irregular Gaussian signaling feature.

29. A computer-readable storage medium, wherein the computer-readable storage medium stores computer instructions, and when the computer instructions are run on a computer, the computer is enabled to perform the communication method according to any one of claims 1 to 15.

30. A chip system, wherein the chip system comprises:

a processor, wherein the processor is coupled to a memory, the memory is configured to store instructions, and the processor is configured to invoke the instructions from the memory and execute the instructions, so that a communication device in which the chip system is installed performs the method according to any one of claims 1 to 15.

31. A computer program product, wherein the computer program product comprises computer instructions, and when the computer instructions are run on a computer, the computer is enabled to perform the method according to any one of claims 1 to 15.

Dynamically adjust a bit
mapping relationship
based on multi-user
interference information

Data of
a user
k → Distribution matching → Forward error correction encoding → Constellation modulation → Spatial multi-user precoding → Radio channel

Indication
information
of a base
station

Estimated
value of
the data of
the user k ← Distribution dematching ← Forward error correction decoding ← Constellation demodulation ← Spatial multi-user detection ←

FIG. 1

200

Network device | Terminal device

S210: Obtain first data

S220: Obtain second data by
performing distribution matching,
forward error correction encoding,
and modulation on the first data

S230: Send the second data
through a plurality of antenna ports

S240: Send indication information,
where the indication information is
used by the terminal device to
determine a bit mapping relationship

S250: Perform distribution
dematching on the second data
based on the bit mapping
relationship to obtain an
estimated value of the first data

FIG. 2

300 | Network device | | Terminal device |

S310: Obtain inter-user interference information $I$ and a constellation point probability $P_0$

S320: Determine a bit mapping relationship $Z$ based on the inter-user interference information $I$ and the constellation point probability $P_0$

S330: Send indication information, where the indication information includes widely linear precoding information

S340: Determine the bit mapping relationship $Z$ based on the widely linear precoding information

S350: Perform bit demapping based on the bit mapping relationship $Z$

FIG. 3

400 | Network device | | Terminal device |

S410: Obtain inter-user interference information $I$ and a constellation point probability $P_0$

S420: Determine a bit mapping relationship $Z$ based on the inter-user interference information $I$ and the constellation point probability $P_0$

S430: Send indication information, where the indication information includes a non-circularity coefficient $\tau$ and a rotation angle $\theta$

S440: Determine the bit mapping relationship $Z$ based on the non-circularity coefficient $\tau$ and the rotation angle $\theta$

S450: Perform bit demapping based on the bit mapping relationship $Z$

FIG. 4

500

| Network device | | Terminal device |

Obtain inter-user interference information $I$ and a constellation point probability $P_0$

Determine a bit mapping relationship $Z$ based on the inter-user interference information $I$ and the constellation point probability $P_0$

Send indication information, where the indication information includes constellation point probability information $P$

Determine the bit mapping relationship $Z$ based on the constellation point probability information $P$

Perform bit demapping based on the bit mapping relationship $Z$

FIG. 5

Communication apparatus 600

Receiving unit 610

Sending unit 620

Processing unit 630

FIG. 6

Communication
apparatus 700

Receiving unit
710

Processing unit
720

FIG. 7

800

810

Processor

Memory

Interface

820

830

FIG. 8

**INTERNATIONAL SEARCH REPORT**

International application No.

**PCT/CN2023/089773**

**A. CLASSIFICATION OF SUBJECT MATTER**

H04L1/00(2006.01)i

According to International Patent Classification (IPC) or to both national classification and IPC

**B. FIELDS SEARCHED**

Minimum documentation searched (classification system followed by classification symbols)

IPC: H04L H04B

Documentation searched other than minimum documentation to the extent that such documents are included in the fields searched

Electronic data base consulted during the international search (name of data base and, where practicable, search terms used)

CNTXT; CNKI; ENTXTC; DWPI; 3GPP; IEEE: 比特映射, 分布匹配, 前向纠错, 指示, 宽线性预编码, 星座, 概率, 干扰, bit mapping, distribution matching, forward error correction, indication, wide linear precoding, constellation, probability, interference

**C. DOCUMENTS CONSIDERED TO BE RELEVANT**

| Category* | Citation of document, with indication, where appropriate, of the relevant passages | Relevant to claim No. |
|---|---|---|
| Y | CN 111630797 A (MITSUBISHI ELECTRIC CORP.) 04 September 2020 (2020-09-04) description, paragraphs 36-47 | 1, 4, 5, 9, 12, 13, 16, 19, 20, 23, 26, 27, 29-31 |
| Y | WO 2022062725 A1 (ZTE CORP.) 31 March 2022 (2022-03-31) description, page 8, paragraph 8 to page 9, paragraph 1 | 1, 4, 5, 9, 12, 13, 16, 19, 20, 23, 26, 27, 29-31 |
| Y | US 2021111940 A1 (HUAWEI TECHNOLOGIES CO., LTD.) 15 April 2021 (2021-04-15) claim 1, and description, paragraphs 88-163 | 1, 4, 5, 9, 12, 13, 16, 19, 20, 23, 26, 27, 29-31 |
| A | CN 112840581 A (HUAWEI TECHNOLOGIES CO., LTD.) 25 May 2021 (2021-05-25) entire document | 1-31 |
| A | US 2019149390 A1 (INFINERA CORP.) 16 May 2019 (2019-05-16) entire document | 1-31 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 July 2023** | **29 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 507 223 A1

**INTERNATIONAL SEARCH REPORT**
Information on patent family members

International application No.

**PCT/CN2023/089773**

| Patent document cited in search report | | | Publication date (day/month/year) | Patent family member(s) | | | Publication date (day/month/year) |
|---|---|---|---|---|---|---|---|
| CN | 111630797 | A | 04 September 2020 | EP | 3718228 | A1 | 07 October 2020 |
| | | | | EP | 3718228 | B1 | 09 March 2022 |
| | | | | US | 10069519 | B1 | 04 September 2018 |
| | | | | WO | 2019146140 | A1 | 01 August 2019 |
| | | | | JP | 2020535741 | A | 03 December 2020 |
| | | | | JP | 6872296 | B2 | 19 May 2021 |
| WO | 2022062725 | A1 | 31 March 2022 | EP | 4199397 | A1 | 21 June 2023 |
| US | 2021111940 | A1 | 15 April 2021 | US | 11303498 | B2 | 12 April 2022 |
| | | | | KR | 20200127233 | A | 10 November 2020 |
| | | | | KR | 102430191 | B1 | 05 August 2022 |
| | | | | JP | 2021517792 | A | 26 July 2021 |
| | | | | JP | 7118168 | B2 | 15 August 2022 |
| | | | | EP | 3754923 | A1 | 23 December 2020 |
| | | | | EP | 3754923 | A4 | 07 April 2021 |
| CN | 112840581 | A | 25 May 2021 | CN | 112840581 | B | 14 June 2022 |
| | | | | WO | 2020083492 | A1 | 30 April 2020 |
| US | 2019149390 | A1 | 16 May 2019 | US | 2019149387 | A1 | 16 May 2019 |
| | | | | US | 2022303166 | A1 | 22 September 2022 |
| | | | | US | 2019149389 | A1 | 16 May 2019 |
| | | | | US | 2019149242 | A1 | 16 May 2019 |
| | | | | US | 11121903 | B2 | 14 September 2021 |
| | | | | US | 2019149388 | A1 | 16 May 2019 |

Form PCT/ISA/210 (patent family annex) (July 2022)

26

**REFERENCES CITED IN THE DESCRIPTION**

**Patent documents cited in the description**

- CN 202210461460